# EUROPEAN PATENT SPECIFICATION

(11) **EP 2 018 615 B1**
(45) Date of publication and mention of the grant of the patent: **26.01.2011**
(21) Application number: 06755104.4
(22) Date of filing: 09.05.2006
(51) Int. Cl.: G06F 13/38, G06F 9/46, H04L 12/40, G06F 5/12

(54) **DATA COMMUNICATION UNIT, INTEGRATED CIRCUIT AND METHOD FOR BUFFERING DATA**
DATENKOMMUNIKATIONSEINHEIT, INTEGRIERTE SCHALTUNG UND VERFARHEN ZUM PUFFERN VON DATEN
UNITÉ DE COMMUNICATION DE DONNÉES, CIRCUIT INTÉGRÉ ET PROCÉDÉ permettant de METTRE DES DONNÉES EN TAMPON

(43) Date of publication of application: 28.01.2009
(73) Proprietor: Freescale Semiconductor, Inc., Austin, TX 78735 (US)
(72) Inventor: LITOVTCHENKO, Vladimir, 85560 Ebersberg (DE); MOELLER, Dirk, 81739 München (DE); PATZELT, Christoph, 85617 Assling (DE)
(74) Representative: Ferro, Frodo Nunes
(86) International application number: PCT/EP2006/062164
(87) International publication number: WO 2007/128347

(56) References cited:
- EP-A- 1 355 456
- EP-A- 1 624 620
- EP-A2- 1 355 458
- WO-A-2005/002145
- "MFR4300 Data Sheet"[Online] April 2006 (2006-04), pages 1-266, XP002412440 Retrieved from the Internet: URL:http://www.freescale.com/files/periphe rals_coprocessors/doc/data_sheet/MFR4300.p df> [retrieved on 2006-12-19]
- INTERNET CITATIONS: 'MFR4200 Data Sheet', [Online] pages 1 - 260 Retrieved from the Internet: <URL:http://kr.ic-on-line.cn/IOL_MFR4200/Pd fView/921341.htm> [retrieved on 2010-01-13]
- MATHIAS RAUSCH: 'FlexRay Solutions and Concepts from Freescale', [Online] 06 March 2007, pages 1 - 32 Retrieved from the Internet: <URL:http://www.vector.com/portal/medien/cm c/speeches/FlexRay_Symposium_2007/FRS07_06_ Rausch.pdf> [retrieved on 2010-01-13]

## Description

### Field of the Invention

Embodiments of the present invention relate to buffering of data in a data communication unit. The invention is applicable to, but not limited to, buffering of data according to the Flexray™ protocol specification.

### Background of the Invention

In a real-time data communication system, a host processor, often referred to as a host central processing unit (CPU), communicates to elements in the data communication system via a communication controller (CC) that buffers the data to be communicated. It is known that data consistency in data communication systems must be preserved. Hence, the host central processing unit (CPU) is typically arranged to control operations of the communication controller (CC) to ensure that the CC and the host CPU have a consistent view on the data that is stored in the buffers, and transmitted by, the CC.

In recent years there has been a significant increase in the amount of electronics that have been introduced into vehicles. This trend is expected to continue as car companies introduce further advances in safety, reliability and comfort. The introduction of advanced control systems in vehicles, which combine multiple sensors, actuators and electronic control units, is beginning to place demands on the communication technology that are not currently addressed by existing communication protocols.

Furthermore, it is known that future in-car control applications have additional requirements that include the combination of higher data rates, deterministic behaviour and the support of fault tolerance. Thus, flexibility in both communication bandwidth and provision of system extensions are also key attributes in data communication systems for vehicles, as the need for increased functionality and on-board diagnostics also increase.

A consortium of companies has been developing a communication system, called Flexray™, which aims to address the requirements for an advanced communication system for future automotive applications, as well as address some of these unique challenges. At the core of the FlexRay™ communication system is the FlexRay™ communications protocol. Details of the Flexray™ communication system and protocol specification can be found at:
*http:*//*flexray.com*/*about.php*

The FlexRay™ communication protocol provides flexibility and determinism by combining a scalable static and dynamic message transmission, thereby incorporating the advantages of known synchronous and asynchronous protocols. The FlexRay™ communication protocol defines a network as a combination of a communication channels that connect nodes of a cluster. Furthermore, according to the Flexray protocol, data is transmitted over the Flexray network in frames during communication cycles. Each communication cycle has one Static segment and optionally one dynamic segment.

The FlexRay™ communication protocol also supports:
- Fault-tolerant clock synchronization via a global time base;
- Collision-free bus access;
- Guaranteed message latency;
- Message oriented addressing via identifiers; and
- Salable system fault-tolerance via the support of either single or dual communication channels.

Within the FlexRay™ communication protocol, communication channels are defined as an inter-node connection through which signals are conveyed for the purpose of communication. The communication channel abstracts both the network topology, e.g. in a bus or star form, as well as the physical transmission medium to be used, e.g. an electrical or optical medium. A physical layer incorporating an independent 'bus guardian' provides further support for error containment. The FlexRay™ communication system is targeted to support data rates of up to 10Mbit/sec with increased flexibility for easy system extension and the dynamic use of bandwidth. The 10Mbit/sec data rate is available on two communication channels, thereby providing a gross data rate of up to 20Mbit/sec.

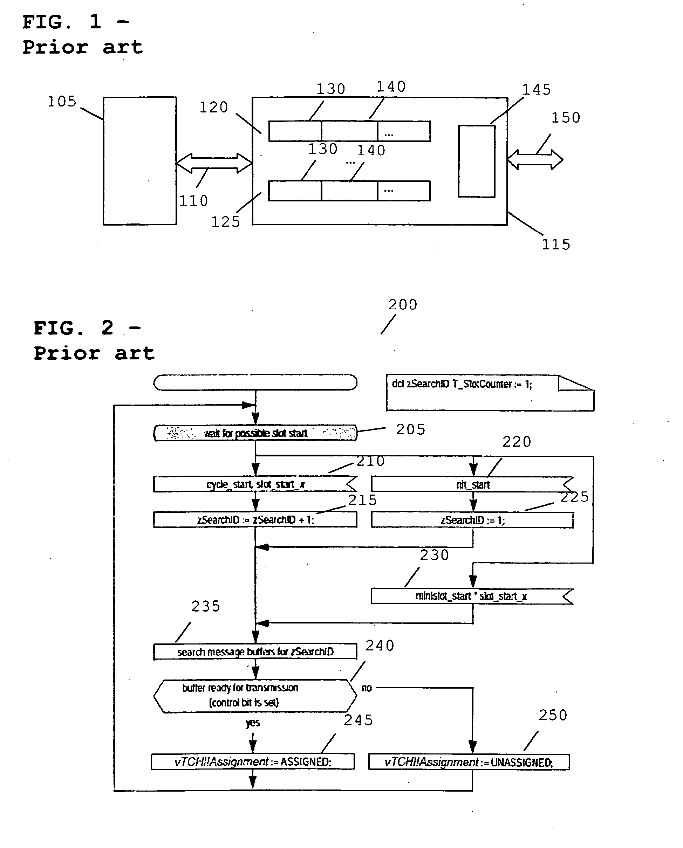

Referring now to FIG. 1, a known host CPU-Communication Controller (CC) arrangement is shown. A host CPU 105 communicates over bus 110 with CC 115. The CC 115 comprises a series of transmit buffers (1-N) 120, 125 (with two transmit buffers being shown for clarity purposes only), each of which comprise a control bit 130. The control bit 130 signifies the transmit buffers 120, 125 that can be utilized for transmission queuing. This allows the host CPU 105 to commit the buffer 120, 125 for transmission, thereby making it valid for the CC operation.

The control bit is followed by a number of data blocks 140. Buffer control logic 145 controls the transmission of data from the respective transmit buffers 120, 125 onto the Flexray™ communication channels 150. The buffer control logic 145 buffers (queues) the transmit buffers for subsequent transmission on the Flexray network, as well as schedules transmission on the communication channels 150.

The host CPU 105 sets the control bit of a transmit buffer over bus 110. Once a control bit 130 has been set, the respective transmit buffer 120, 125 becomes committed, i.e. valid for transmission. Thus, the host CPU 105 is unable to reset the control bit. The CC 115 is only able to reset the control bit 130, and notably only following transmission of the transmit buffer 120, 125.

If a transmit buffer 120, 125 is assigned for a slot in the static segment, and committed, then a valid (buffered) frame is transmitted. In this regard, a static segment is a static time division multiple access scheme that is applied to coordinate transmissions. If a transmit buffer 120, 125 is assigned to a slot in the static segment, and not committed by the host CPU 105, then a null frame is transmitted.

Referring now to FIG. 2, a known scheduling process 200 for an upcoming static or dynamic slot is illustrated. The process searches through all available transmit buffers, once a slot start has been identified in step 205. The process starts in response to one of the following triggers: a cycle_start (for the Frame ID 1), slot_start_x (where x - is channel 'A' or 'B') or minislot_start, as shown in step 215. A variable zSearchID holds the Frame ID value of the upcoming slot in step 215. The variable zSearchID is set to '1' in step 225, with a nit_start operation, in step 220, as the first slot of the upcoming communication cycle will have Frame ID=1.

The scheduling is performed by checking two fields of each available transmit buffer, i.e. a frame identifier (ID) is checked against zSearchID in step 235, and the control bit is checked to see if it is a '1', thereby indicating that the buffer is committed by the host, in step 240. If the condition is true for a transmit buffer then the upcoming slot is assigned to the CC in step 245 and the CC will transmit data stored in the transmit buffer. If the condition is false for a transmit buffer, then the upcoming slot is not assigned to the CC, as shown in step 250.

A transmission commences after the host CPU data is completely passed to the transmit buffer. In this manner, and for every slot and for each channel, the CC determines whether it is to transmit a frame, execute the required transmit sequence, and receive the status for that slot, i.e. the CC schedules operations for the upcoming slot.

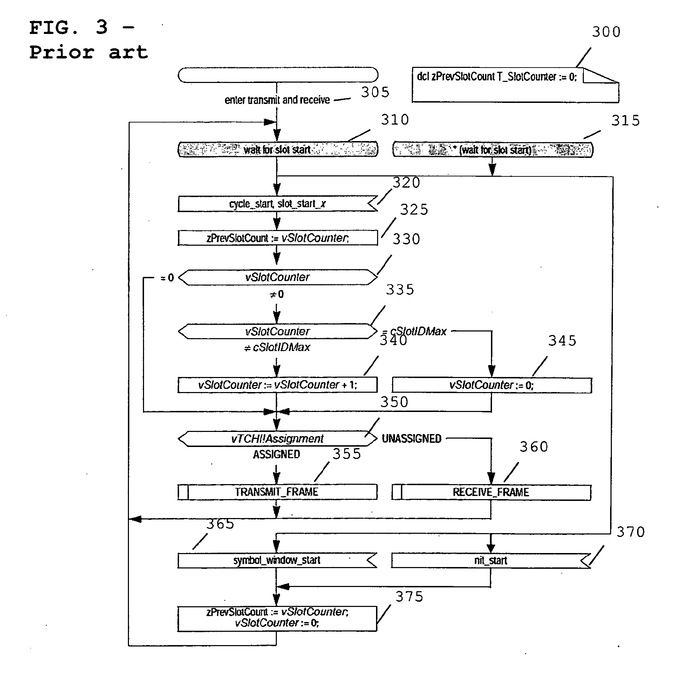

After the scheduling operation is finished the CC performs a transmit operation in channel 'x', as shown in the flowchart 300 of FIG. 3. Here, once the process has entered a transmit mode of operation in step 305, and a slot_start position has been identified in step 310, 315, a slot counter process is initiated in order to identify slots to be transmit (or received), as known in the art and shown in steps 320 to 345. A determination is then made as to whether a traffic channel has been assigned and the frame is then transmitted (or received) in steps 350 to 360. Thereafter, steps 365-375 are the processes waiting for 'symbol_window_start' and 'nit_start' events at which the "zPrevSlotCount' receives 'vSlotCounter' value, and the 'vSlotCounter' is reset to '0' for the new upcoming communication cycle.

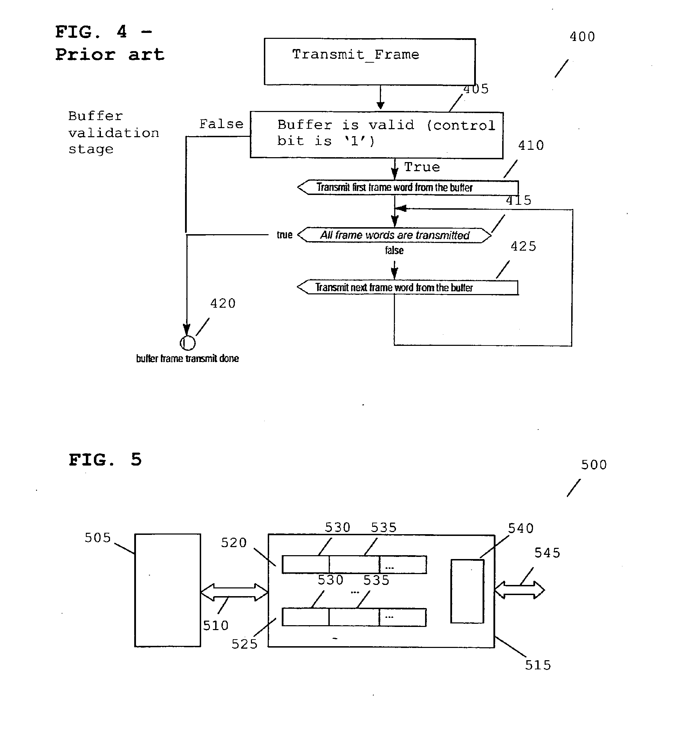

Referring now to FIG. 4, the transmit operation process itself is illustrated. Once the transmit frame has been identified from the process of FIG. 3, a determination is made as to whether the buffer is valid, i.e. the control bit is checked to identify whether it is a '1', in step 405. If the buffer is valid in step 405, the first frame word from the buffer is transmitted in step 410. A determination is then made in step 415 as to whether all frame words have been transmitted. If all frame words have not been transmitted in step 415, the next frame word is transmitted from the buffer in step 425 and the process loops back to step 415. If all frame words have been transmitted in step 415, the buffer frame transmit operation is completed in step 420.

However, it is noteworthy that, within the known solution, the host CPU 105 is neither able to access, nor uncommit, an already committed transmit buffer unless it has already been transmitted by the CC on a communication channel.

Thus, it is not possible to access or uncommit an already committed transmit buffer for the following reasons:
1) The protection mechanism of the known solution guarantees data consistency. Hence, the host CPU 105 is unable to uncommit one or more already scheduled transmit buffer(s);
2) The host CPU 105 and the CC 115 may operate in different clock domains, for example to support independent operation of both the host CPU 105 and the controller 115; and
3) The time period from buffer commitment until the transmit buffer is transmitted is considered as time where the buffer can be accessed only by the CC 115.

EP0496177 A1 describes a method for chaining of transmit buffers. In response to a host CPU command, the data is transferred to the chained transmit buffers. The host CPU is interrupted after all of the transmit buffers are transmitted on the network.

US Patent Application US20050180445 describes a method whereby the host CPU transmits its data through a network by accessing a transmit buffer where the transmission flow is controlled by two transmission interfaces.

International Patent Application WO2005/002145 describes a method for managing a memory that is accessed by a communications controller and a host processor, whereby an identifier is assigned to each data message and at least a number of buffers that corresponds to the number of relevant identifiers is provided in the memory of a network node, the assignment of buffers and identifiers being fixed. Control data is stored in at least some of the buffers that have been assigned to the identifiers, said data containing at least one reference to the payload of the associated identifier. The payload is stored in the associated buffer of the identifier and/or in another buffer and/or in a central memory module.

European Patent Application EP1355456 describes a method whereby a host CPU commits a transmit buffer for transmission by a communication controller, and the communication controller subsequently un-commits the transmit buffer after transmission has been completed.

Thus, neither of the above two documents solve the aforementioned problems. Hence, a need exists for an improved data communication unit, integrated circuit and method of buffering data to support safe invalidation of a transmit buffer that includes data that is already scheduled by the CC, and/or the safe commitment of a transmit buffer.

### Summary of the Invention

In accordance with aspects of the present invention, there is provided an improved data communication unit, integrated circuit and method of buffering data therein, as defined in the appended Claims.

### Brief Description of the Drawings

FIG. 1 illustrates a known interaction between a host CPU and a communication controller in a Flexray™ system;
FIG. 2 illustrates a known process for buffer scheduling in a Flexray™ system;
FIG. 3 illustrates a known process for transmitting a frame in a Flexray™ system; and
FIG. 4 illustrates a known process for buffer scheduling in a Flexray™ system.

Exemplary embodiments of the present invention will now be described, by way of example only, with reference to the accompanying drawings, in which:
FIG. 5 illustrates an interaction between a host CPU and a communication controller in a Flexray™ system adapted in accordance with embodiments of the present invention;
   and
FIG. 6 illustrates a buffer and transmit process of a Flexray™ system adapted in accordance with embodiments of the present invention.

### Description of Embodiments of the Invention

In one embodiment of the present invention a data communication unit comprises a host processor operably coupled to a communication controller having a plurality of buffers comprising a plurality of data elements. The plurality of data elements comprise a lock data element for access by the host processor to acquire sole use of a respective buffer of the plurality of buffers and a commit data element for access by the host processor once sole use of the respective buffer has been acquired wherein use of the lock data element enables the host processor to un-commit a buffer that has previously been committed for transmission by the communication controller.

In this manner, the use of a lock data element, such as a lock bit, to access a commit data element, such as a commit bit, may enable the host processor to access a transmit buffer, for example during an invalidation operation performed by the host CPU, whilst ensuring that data consistency is preserved. In addition, the use of a lock data element and a commit data element may support safe invalidation of transmit buffers before and after a scheduling of a transmission by a CC.

In one embodiment of the present invention, the host processor may be arranged to perform a number of data validation updates and/or checks of a respective buffer once it has acquired sole use of a respective buffer of the plurality of buffers.

In one embodiment of the present invention, the host processor may be arranged to invalidate a buffer for transmission by resetting a commit data element of the respective buffer, for example after the respective buffer has been locked by the host processor. In this manner, the host processor may be able to invalidate (and potentially subsequently make valid again) a buffer that had been scheduled for transmission by the CC, but where the transmission had not yet started.

In one embodiment of the present invention, the communication controller may be configured to block the host processor from accessing the buffer by setting the lock data element of the respective buffer. In this manner, the communication controller can control the scheduling and transmission of buffered data without fear of interruption by the host processor. In this manner, the buffer data and buffer state are consistent and the buffer access ownership is preserved.

In one embodiment of the present invention, the data communication unit may be adapted for use with the Flexray™ communication protocol.

In one embodiment of the present invention, an integrated circuit comprises a host processor operably coupled to a communication controller having a plurality of buffers, each having a plurality of data elements. The plurality of data elements comprises a lock data element for access by the host processor to acquire sole use of a respective buffer of the plurality of buffers. The plurality of data elements also comprise a commit data element for access by the host processor once sole use of the respective buffer has been acquired wherein use of the lock data element enables the host processor to un-commit a buffer that has previously been committed for transmission by the communication controller.

In one embodiment of the present invention, a method of buffering data in a communication controller, comprising a plurality of buffers having a plurality of data elements, is described. The method comprises committing a buffer for transmission by the communication controller and acquiring sole use of a respective buffer of the plurality of buffers by setting a lock data element. The method further comprises controlling access of the respective buffer by the host processor once sole use of the respective buffer has been acquired by setting of a commit data element; and un-committing the committed buffer by the host processor via use the lock data element.

One embodiment of the present invention will be described in terms of a Flexray™ system. However, it will be appreciated by a skilled artisan that the inventive concept herein described may be embodied in any type of host CPU-communication controller architecture.

Referring now to FIG. 5, a host CPU-Communication Controller (CC) arrangement is shown according to embodiments of the present invention. A host CPU 505 communicates over bus 510 with CC 515. The CC 515 comprises a series of transmit buffers (1-N) 520, 525, each of which comprise a commit data element 530, for example in the form of a commit bit, that signifies the transmit buffers 520, 525 can be utilized for transmission queuing. This allows the host CPU 505 to commit the buffer 520, 525 for transmission.

Furthermore, the commit bit 530 is followed by a lock data element 535, for example in the form of a lock bit, and a number of data blocks 540. The commit bit 530 and lock bit 535 control the enhanced functionality of the buffer control logic 545. In this regard, the expression 'enhanced functionality' encompasses a possibility to invalidate an already committed buffer, even if it was scheduled for transmission but is yet to be transmitted. Buffer control logic 545 controls the transmission of data from the respective transmit buffers 520, 525 onto the Flexray™ communication channels 550. In effect, buffer control logic 545 buffers (queues) the transmit buffers for subsequent transmission on the Flexray™ network, as well as schedules transmission on the communication channels 550.

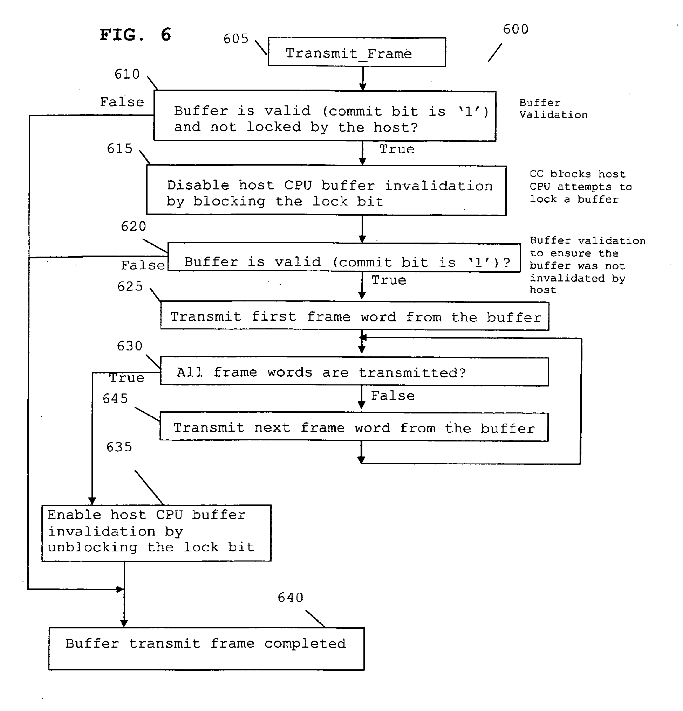

For every slot, and for each channel, the CC 515 determines whether it is to transmit a data frame, execute the required transmit sequence, and receive a status for that slot. In this regard, the CC 515 schedules operations for the upcoming slot. The CC 515 performs scheduling according to the known Flexray™ protocol. After the scheduling operation is finished the CC 515 may or may not perform transmit operations based on the results of two validation stage results, as illustrated in FIG. 6. However, the CC 515 transmit operations are modified according to the embodiments described herein.

In accordance with embodiments of the present invention, the host CPU 505 is able to identify which entity, for example either the host CPU 505 or the CC 515, has temporary ownership of the respective transmit buffer 520, 525. To identify ownership, the host CPU 505 reads a lock bit 535 on the respective transmit buffer to identify whether it is locked by the host CPU 505, for example if the lock bit returns a '1', or the CC 515 if the lock bit returns, for example, a '0'. In the former case, this means that the transmit buffer is not currently utilized by the CC 515 for transmission. In contrast, in the latter case, the CC 515 would be utilizing the buffer for transmission on the Flexray™ bus. In effect, if the lock bit returns a '0', the CC 515 is blocking any attempt from the host CPU 505 to lock the respective transmit buffer 520, 525, and thereafter update or validate the data therein.

In order to access a buffer, the host CPU 505 first 'locks' a transmit buffer, which defines ownership of that transmit buffer, by setting the respective lock bit 535. The host CPU 505 locks a transmit buffer by writing, say, a '1' to the buffer lock bit over bus 510. After the lock is 'granted', the host CPU 505 is then able to commit the respective transmit buffer 520, 525 for transmission by setting the corresponding commit bit 530. Thereafter, the host CPU 505 is able to unlock the transmit buffer by resetting the lock bit 535, thereby making the frame available for the CC to initiate transmission on the Flexray™ network.

Advantageously, by use of a commit bit 530 and lock bit 535 in the above manner, the host CPU 505 is able to reset the commit bit 530 of a transmit buffer, i.e. make it invalid for the CC transmit operation on the Flexray™ network, after the buffer has been locked by the host CPU 505. Thus, the host CPU 505 is able to freely update or validate data in the respective buffer without fear of the CC initiating transmission. By locking the transmit buffer, the host CPU 505 prevents the CC 515 from accessing the transmit buffer. If the lock is granted, the host CPU 505 has control rights over the respective transmit buffers 520, 525 that it has set the lock bit for, so that the CC 515 ignores the respective transmit buffer(s) 520, 525 during a scheduling and/or a transmission operation.

In this manner, the host CPU 505 is able to access a transmit buffer 520, 525 for write operations to a respective commit bit 530 only after the transmit buffer has been locked by the host CPU 505, by setting the lock bit 535. In one embodiment of the present invention, lock is granted to the host CPU 505 only when the CC 515 has not utilized the respective transmit buffer for an internal transmit operation.

Thus, the host CPU 505 is able to safely invalidate a committed transmit buffer, even if it has already been scheduled for transmission by the CC 515. Furthermore, the host CPU 505 is able to perform any number of validation/ invalidation steps, as well as updating a transmit buffer with the latest data, before the buffer(s) is/are transmitted.

Furthermore, in one embodiment of the present invention, the host CPU 505 may be able to invalidate and subsequently make valid again a transmit buffer 520, 525 that was already scheduled for transmission, but where its transmission had not yet started, by setting or resetting a commit bit of the transmit buffer 520, 525.

If the host CPU 505 invalidates a transmit buffer 520, 525 after it was scheduled for transmission by the CC 515, but the transmission has not yet started, then dependent upon the communication cycle segment (e.g. whether it was static or dynamic) the CC 515 may or may not transmit a 'null-frame' based on the scheduled transmit buffer header data, to comply with the Flexray™ protocol.

Before the CC 515 transmits the data in a transmit buffer 520, 525, the CC 515 may perform a validation check to ascertain whether the buffer may have been (or may not have been) invalidated by the host CPU 505. Furthermore, the CC 515 prevents the granting of control over a respective transmit buffer 520, 525 to the host CPU 505 once a transmission has already started. This is achieved by the CC 515 setting the lock bit 535, thereby blocking any attempt by the host CPU 505 to lock the respective transmit buffer 520, 525.

Thus, the host CPU 505 may be able to invalidate a transmit buffer any time before the CC 515 starts transmission of the buffered frame of data. Prior to the CC 515 locking the transmit buffer 520, 525 for transmission, the host CPU 505 may be able to lock and perform invalidation operations on any number of transmit buffers.

In one embodiment of the present invention, the host CPU 505 is able to uncommit a transmit buffer by resetting the commit bit after the respective transmit buffer 520, 525 had been locked by the host CPU 505. In this case, the transmit buffer becomes invalid for transmission, noting that each transmit buffer has its own commit bit and lock bit.

In one embodiment of the present invention, if the CC 515 has started a frame transmission operation from a transmit buffer, then any host CPU lock request will be ignored and the lock will not be granted by the CC 515. Hence, the safety of validation/ invalidation operations is guaranteed by clear buffer ownership controlled by the lock bit.

Referring now to FIG. 6, a flowchart 600 illustrates a flowchart of a buffer control logic operation according to embodiments of the present invention. Once a transmit frame has been identified in the buffer control logic of the CC as shown in step 605, a determination is made as to whether the transmit buffer is valid in step 610 and not locked by the host CPU. In this regard, a determination may be made as to whether the commit bit is a '1', thereby identifying the transmit buffer as being valid. If the transmit buffer is valid in step 610, the host CPU is blocked access to the lock bit of the respective transmit buffer, as shown in step 615. A further check is then made as to whether the transmit buffer is valid in step 620.

If the transmit buffer is valid in step 620, the first frame word from the transmit buffer is transmit, as shown in step 625. A determination is then made as to whether all of the frame words have been transmitted in step 630. If all of the frame words have not been transmitted in step 630, the next frame word is transmit from the buffer in step 645 and the process loops back to step 630. If all of the frame words have been transmitted in step 630, the host CPU may gain access to the transmit buffer by the CC unblocking the lock bit, as shown in step 635.

It will be understood that an improved data communication unit, integrated circuit and method of buffering data therein, as described above, aim to provide at least one or more of the following advantages:
(i) Transmit buffer data consistency is preserved during an invalidation operation by the host CPU, as each transmit buffer has its own commit bit and lock bit;
(ii) In addition, the inventive concept supports safe invalidation of transmit buffers before and after the scheduling of a transmission;
(iii) The inventive concept also provides CC fault-silent behaviour, should the host CPU perform an incorrect buffer invalidation operation, performed by the CC blocking the host processor lock requests during transmission;
(iv) The amount of time that the host CPU can access one or more respective transmit buffer(s) is significantly increased; and
(v) The host CPU is able to reset a commit bit of a transmit buffer (i.e. make it invalid for the CC transmit operation on the Flexray Network) only after the buffer has been locked by the host CPU.

It will be appreciated that any suitable distribution of functionality between different functional or logical units may be used without detracting from the inventive concept herein described. Hence, references to specific functional devices or logic elements are only to be seen as references to suitable means for providing the described functionality, rather than indicative of a strict logical or physical structure or organization.

Aspects of the invention may be implemented in any suitable form including hardware, software, firmware or any combination of these. The elements and components of an embodiment of the invention may be physically, functionally and logically implemented in any suitable way. Indeed, the functionality may be implemented in a single unit or IC, in a plurality of units or ICs or as part of other functional units.

In particular, it is envisaged that the aforementioned inventive concept can be applied by a semiconductor manufacturer to any integrated circuit comprising a host CPU and/or communication controller (or equivalent logic or functional elements or devices). It is further envisaged that, for example, a semiconductor manufacturer may employ the inventive concept in a design of a standalone device or application-specific integrated circuit (ASIC) and/or any other sub-system element.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality.

Thus, an improved data communication unit, integrated circuit and method of buffering data therein have been described, wherein the aforementioned disadvantages with prior art arrangements have been substantially alleviated.

## Claims

1. A data communication unit (500) comprising a host processor (505) operably coupled to a communication controller (515) having a plurality of buffers (520, 525) comprising a plurality of data elements having a lock data element (535) for access by the host processor (505) to acquire sole use of a respective buffer of the plurality of buffers (520, 525) and a commit data element (530) for access by the host processor (505) once sole use of the respective buffer has been acquired, the data communication unit (500) **characterized in that** use of the lock data element (535) is arranged to enable the host processor (505) to un-commit a buffer that has previously been committed for transmission by the communication controller (515).

2. The data communication unit (500) according to Claim 1 further **characterised in that** the host processor (505) is arranged to perform a number of data validation checks of a respective buffer (520, 525) once it has acquired sole use of a respective buffer of the plurality of buffers (520, 525).

3. The data communication unit (500) according to Claim 1 or Claim 2 further **characterised in that** the host processor (505) is arranged to invalidate a buffer (520, 525) for transmission by resetting a commit data element (530) of the respective buffer (520, 525).

4. The data communication unit (500) according to Claim 3 further **characterised in that** the host processor (505) is arranged to invalidate a buffer (520, 525) for transmission by resetting a commit data element (530) of the respective buffer (520, 525) after the respective buffer (520, 525) has been locked by the host processor (505).

5. The data communication unit (500) according to any preceding Claim further **characterised in that** the communication controller (515) is configured to block the host processor (505) from accessing the buffer (520, 525) by setting the lock data element (535) of the respective buffer (520, 525).

6. The data communication unit (500) according to any preceding Claim further **characterised in that** the data communication unit has been adapted for use with the Flexray communication protocol.

7. A data communication system adapted to support communications from a data communication unit (500) according to any of the preceding Claims.

8. The data communication system according to Claim 7 adapted to support the Flexray communication protocol.

9. An integrated circuit comprising a host processor (505) operably coupled to a communication controller (515) having a plurality of buffers (520, 525) comprising a plurality of data elements having a lock data element (535) for access by the host processor (505) to acquire sole use of a respective buffer of the plurality of buffers (520, 525) and a commit data element (530) for access by the host processor (505) once sole use of the respective buffer has been acquired, the integrated circuit **characterized in that** use of the lock data element (535) is arranged to enable the host processor (505) to un-commit a buffer that has previously been committed for transmission by the communication controller (515).

10. The integrated circuit according to Claim 9 further **characterised in that** the host processor (505) is arranged to perform a number of data validation checks of a respective buffer (520, 525) once it has acquired sole use of a respective buffer of the plurality of buffers (520, 525).

11. The integrated circuit according to any of preceding Claims 9 or 10 further **characterised in that** the host processor (505) is arranged to invalidate a buffer (520, 525) for transmission by resetting a commit data element (530) of the respective buffer (520, 525).

12. The integrated circuit according to Claim 11 further **characterised in that** the host processor (505) is arranged to invalidate a buffer (520, 525) for transmission by resetting a commit data element (530) of the respective buffer (520, 525) after the respective buffer (520, 525) has been locked by the host processor (505).

13. The integrated circuit according to any of preceding Claims 9 to 12 further **characterised in that** the communication controller (515) is configured to block the host processor (505) from accessing the buffer (520, 525) by setting the lock data element (535) of the respective buffer (520, 525).

14. A method (600) of buffering data in a communication controller comprising a plurality of buffers (520, 525) having a plurality of data elements, by a host processor, the method (600) comprising committing a buffer for transmission by the communication controller (515), the committing of a buffer for transmission by the communication controller comprising:
acquiring sole use of a respective buffer of the plurality of buffers (520, 525) by setting a lock data element (535); and
controlling access of the respective buffer by the host processor (505) once sole use of the respective buffer has been acquired by setting of a commit data element (530);
the method **characterized by**:
un-committing the committed buffer by the host processor (505) via use of the lock data element (535).

15. The method (600) of buffering data in a communication controller according to Claim 14 further **characterised by** a preceding step of:
identifying a value of the lock data element (535) to determine whether the host processor is able to access the transmit buffer.

16. The method (600) of buffering data in a communication controller according to Claim 14 or Claim 15 further **characterised by**:
identifying (610) a value of a commit data element in order to determine whether a buffer associated with the data frame is valid.

17. The method (600) of buffering data in a communication controller according to any of preceding Claims 14 to 16 further **characterised by**:
blocking (615) the host processor from accessing the buffer by preventing access (615) to the lock data element of the respective buffer by the host processor.

## Patentansprüche

1. Datenkommunikationseinheit (500) umfassend einen Host-Prozessor (505), der mit einem Kommunikationskontroller (515) betriebsfähig gekoppelt ist, wobei der Kommunikationskontroller (515) eine Vielzahl von Puffern (520, 525) umfassend eine Vielzahl von Datenelementen mit einem für den Host-Prozessor (505) zugänglichen Sperrdatenelement (535), um die alleinige Nutzung eines zugehörigen Puffers der Vielzahl von Puffern (520, 525) zu erlangen, und einem, sobald eine alleinige Nutzung des zugehörigen Puffers erlangt wurde, für den Host-Prozessor (505) zugänglichen Bindungsdatenelement (530) aufweist, und wobei die Datenkommunikationseinheit (500) **dadurch gekennzeichnet ist, dass** eine Verwendung des Sperrdatenelementes (535) dazu eingerichtet ist, dem Host-Prozessor (505) das Freigeben eines Puffers zu ermöglichen, der vorher zur Übertragung durch den Kommunikationskontroller (515) gebunden wurde.

2. Datenkommunikationseinheit (500) gemäß Anspruch 1, weiterhin **dadurch gekennzeichnet, dass** der Host-Prozessor (505) dazu eingerichtet ist, eine Anzahl von Datenprüfungen eines zugehörigen Puffers (520, 525) auszuführen, sobald er die alleinige Nutzung eines zugehörigen Puffers der Vielzahl der Puffer (520, 525) erlangt hat.

3. Datenkommunikationseinheit (500) gemäß Anspruch 1 oder Anspruch 2, weiterhin **dadurch gekennzeichnet, dass** der Host-Prozessor (505) dazu eingerichtet ist, einen zur Übertragung bestimmten Puffer (520, 525) durch das Zurücksetzen eines Bindungsdatenelementes (530) des zugehörigen Puffers (520, 525) für ungültig zu erklären.

4. Datenkommunikationseinheit (500) gemäß Anspruch 3, weiterhin **dadurch gekennzeichnet, dass** der Host-Prozessor (505) dazu eingerichtet ist, einen zur Übertragung bestimmten Puffer (520, 525) durch das Zurücksetzen eines Bindungsdatenelementes (530) des zugehörigen Puffers (520, 525) für ungültig zu erklären, nachdem der zugehörige Puffer (520, 525) durch den Host-Prozessor (505) gesperrt wurde.

5. Datenkommunikationseinheit (500) gemäß einem der vorhergehenden Ansprüche, weiterhin **dadurch gekennzeichnet, dass** der Kommunikationskontroller (515) konfiguriert ist, das Zugreifen des Host-Prozessors (505) auf den Puffer (520, 525) durch das Setzen des Sperrdatenelementes (535) des zugehörigen Puffers (520, 525) zu blocken.

6. Datenkommunikationseinheit (500) gemäß einem der vorhergehenden Ansprüche, weiterhin **dadurch gekennzeichnet, dass** die Datenkommunikationseinheit zur Verwendung mit dem Flexray-Kommunikationsprotokoll ausgelegt ist.

7. Datenkommunikationssystem, das dazu ausgelegt ist, Kommunikation von einer Datenkommunikationseinheit (500) gemäß einem der vorhergehenden Ansprüche zu unterstützen.

8. Datenkommunikationssystem gemäß Anspruch 7, das zur Unterstützung des Flexray-Kommunikationsprotokolls ausgelegt ist.

9. Integrierte Schaltung umfassend einen Host-Prozessor (505), der mit einem Kommunikationskontroller (515) betriebsfähig gekoppelt ist, wobei der Kommunikationskontroller (515) eine Vielzahl von Puffern (520, 525) umfassend eine Vielzahl von Datenelementen mit einem für den Host-Prozessor (505) zugänglichen Sperrdatenelement (535), zum Erlangen der alleinigen Nutzung eines zugehörigen Puffers der Vielzahl von Puffern (520, 525), und einem, sobald eine alleinige Nutzung des zugehörigen Puffers erlangt wurde, für den Host-Prozessor (505) zugänglichen Bindungsdatenelement (530) aufweist, und wobei die integrierte Schaltung **dadurch gekennzeichnet ist, dass** eine Verwendung des Sperrdatenelementes (535) dazu eingerichtet ist, dem Host-Prozessor (505) das Freigeben eines Puffers zu ermöglichen, der vorher zur Übertragung durch den Kommunikationskontroller (515) gebunden wurde.

10. Integrierte Schaltung gemäß Anspruch 9, weiterhin **dadurch gekennzeichnet, dass** der Host-Prozessor (505) dazu eingerichtet ist, eine Anzahl von Datenprüfungen eines zugehörigen Puffers (520,525) auszuführen, sobald er die alleinige Verwendung eines zugehörigen Puffers der Vielzahl der Puffer (520, 525) erlangt hat.

11. Integrierte Schaltung gemäß Anspruch 9 oder Anspruch 10, weiterhin **dadurch gekennzeichnet, dass** der Host-Prozessor (505) dazu eingerichtet ist einen zur Übertragung bestimmten Puffer (520, 525) durch das Zurücksetzen eines Bindungsdatenelementes (530) des zugehörigen Puffers (520, 525) für ungültig zu erklären.

12. Integrierte Schaltung gemäß Anspruch 11, weiterhin **dadurch gekennzeichnet, dass** der Host-Prozessor (505) dazu eingerichtet ist, einen zur Übertragung bestimmten Puffer (520, 525) durch das Zurücksetzen eines Bindungsdatenelementes (530) des zugehörigen Puffers (520, 525) für ungültig zu erklären, nachdem der zugehörige Puffer (520, 525) durch den Host-Prozessor (505) gesperrt wurde.

13. Integrierte Schaltung gemäß einem der Ansprüche 9 bis 12, weiterhin **dadurch gekennzeichnet, dass** der Kommunikationskontroller (515) konfiguriert ist, das Zugreifen des Host-Prozessors (505) auf den Puffer (520, 525) durch das Setzen des Sperrdatenelementes (535) des zugehörigen Puffers (520, 525) zu blocken.

14. Verfahren (600) zum Puffern von Daten in einem eine Vielzahl von Puffern (520, 525) mit einer Vielzahl von Datenelementen umfassenden Kommunikationskontroller, durch einen Host-Prozessor, wobei das Verfahren (600) ein Binden eines Puffers zur Übertragung durch den Kommunikationskontroller (515) umfasst, und wobei das Binden eines Puffers zur Übertragung durch den Kommunikationskontroller folgende Schritte umfasst:
Erlangen der alleinigen Nutzung eines zugehörigen Puffers der Vielzahl der Puffer (520, 525) durch Setzen eines Sperrdatenelementes (535); und
Kontrollieren des Zugriffs auf den zugehörigen Puffer durch den Host-Prozessor (505), sobald die alleinige Nutzung des zugehörigen Puffers durch Setzen eines Bindungsdatenelementes (530) erreicht wurde;
und wobei das Verfahren **gekennzeichnet ist durch**:
Freigeben des gebundenen Puffers **durch** den Host-Prozessor (505) **durch** Verwendung des Sperrdatenelementes (535).

15. Verfahren (600) zum Puffern von Daten in einem Kommunikationskontroller gemäß Anspruch 14, weiterhin **gekennzeichnet durch** folgenden vorausgehenden Schritt:
Identifizieren eines Wertes des Sperrdatenelementes (535), um zu bestimmen, ob der Host-Prozessor berechtigt ist, auf den Übertragungspuffer zuzugreifen.

16. Verfahren (600) zum Puffern von Daten in einem Kommunikationskontroller gemäß Anspruch 14 oder Anspruch 15, weiterhin **gekennzeichnet durch**:
Identifizieren (610) eines Wertes eines Bindungsdatenelementes, um zu Bestimmen, ob ein dem Datenframe zugehöriger Puffer gültig ist.

17. Verfahren (600) zum Puffern von Daten in einem Kommunikationskontroller gemäß einem der Ansprüche 14 bis 16, weiterhin **gekennzeichnet durch**:
Blockieren (615) des Zugriffs des Host-Prozessors auf den Puffer **durch** das Verhindern des Zugriffs (615) auf das Sperrdatenelement des zugehörigen Puffers durch den Host-Prozessor.

## Revendications

1. Unité de communication (500) comportant un processeur hôte (505) couplé en fonctionnement à un contrôleur de communication (515) possédant une pluralité de tampons (520, 525) comportant une pluralité d'éléments de données possédant un élément de données de verrouillage (535) pour un accès par le processeur hôte (505) afin d'acquérir une utilisation unique d'un tampon respectif parmi la pluralité de tampons (520, 525) et un élément de données de validation (530) pour un accès par le processeur hôte (505) une fois que l'utilisation unique du tampon respectif a été acquise, l'unité de communication de données (500) étant **caractérisée en ce que** l'utilisation de l'élément de données de verrouillage (535) est agencée pour permettre au processeur hôte (505) d'invalider un tampon qui a été préalablement validé pour une transmission par le contrôleur de communication (515).

2. Unité de communication de données (500) selon la revendication 1, **caractérisée en outre en ce que** le processeur hôte (505) est agencé pour effectuer un certain nombre de contrôles de validation des données d'un tampon respectif (520, 525) une fois qu'il a acquis une utilisation unique d'un tampon respectif parmi la pluralité de tampons (520, 525).

3. Unité de communication de données (500) selon la revendication 1 ou la revendication 2, **caractérisée en outre en ce que** le processeur hôte (505) est agencé pour invalider un tampon (520, 525) pour une transmission en réinitialisant un élément de données de validation (530) du tampon respectif (520, 525).

4. Unité de communication de données (500) selon la revendication 3, **caractérisée en outre en ce que** le processeur hôte (505) est agencé pour invalider un tampon (520, 525) pour une transmission en réinitialisant un élément de données de validation (530) du tampon respectif (520, 525) après que le tampon respectif (520, 525) a été verrouillé par le processeur hôte (505).

5. Unité de communication de données (500) selon l'une quelconque des revendications précédentes, **caractérisée en outre en ce que** le contrôleur de communication (515) est configuré pour bloquer l'accès au tampon (520, 525) par le processeur hôte (505) en fixant l'élément de données de verrouillage (535) du tampon respectif (520, 525).

6. Unité de communication de données (500) selon l'une quelconque des revendications précédentes, **caractérisée en outre en ce que** l'unité de communication de données a été adaptée pour une utilisation avec le protocole de communication Flexray.

7. Système de communication de données adapté pour supporter des communications à partir d'une unité de communication de données (500) selon l'une quelconque des revendications précédentes.

8. Système de communication selon la revendication 7 adapté pour supporter le protocole de communication Flexray.

9. Circuit intégré comportant un processeur hôte (505) couplé en fonctionnement à un contrôleur de communication (515) possédant une pluralité de tampons (520, 525) comportant une pluralité d'éléments de données possédant un élément de données de verrouillage (535) pour un accès par le processeur hôte (505) afin d'acquérir une utilisation unique d'un tampon respectif parmi la pluralité de tampons (520, 525) et un élément de données de validation (530) pour un accès par le processeur hôte (505) une fois que l'utilisation unique du tampon respectif a été acquise, le circuit intégré étant **caractérisé en ce que** l'utilisation de l'élément de données de verrouillage (535) est agencée pour permettre au processeur hôte (505) d'invalider un tampon qui a été préalablement validé pour une transmission par le contrôleur de communication (515).

10. Circuit intégré selon la revendication 9, **caractérisé en outre en ce que** le processeur hôte (505) est agencé pour effectuer un certain nombre de contrôles de validation de données d'un tampon respectif (520, 525) une fois qu'il a acquis une utilisation unique d'un tampon respectif parmi la pluralité de tampons (520, 525).

11. Circuit intégré selon l'une quelconque des revendications 9 ou 10, **caractérisé en outre en ce que** le processeur hôte (505) est agencé pour invalider un tampon (520, 525) pour une transmission en réinitialisant un élément de données de validation (530) du tampon respectif (520, 525).

12. Circuit intégré selon la revendication 11, **caractérisé en outre en ce que** le processeur hôte (505) est agencé pour invalider un tampon (520, 525) pour une transmission en réinitialisant un élément de données de validation (530) du tampon respectif (520, 525) après que le tampon respectif (520, 525) a été verrouillé par le processeur hôte (505).

13. Circuit intégré selon l'une quelconque des revendications 9 à 12, **caractérisé en outre en ce que** le contrôleur de communication (515) est configuré pour bloquer l'accès au tampon (520, 525) par le processeur hôte (505) en fixant l'élément de données de verrouillage (535) du tampon respectif (520, 525).

14. Procédé (600) de mise en tampon de données dans un contrôleur de communication comportant une pluralité de tampons (520, 525) possédant une pluralité d'éléments de données, par un processeur hôte, le procédé (600) comportant la validation d'un tampon pour une transmission par le contrôleur de communication (515), la validation d'un tampon pour une transmission par le contrôleur de communication comportant :
l'acquisition d'une utilisation unique d'un tampon respectif parmi la pluralité de tampons (520, 525) en fixant un élément de données de verrouillage (535) ; et
le contrôle d'un accès du tampon respectif par le processeur hôte (505) une fois que l'utilisation unique du tampon respectif a été acquise en fixant un élément de données de validation (530) ;
le procédé étant **caractérisé par** :
la validation du tampon validé par le processeur hôte (505) par l'intermédiaire de l'utilisation de l'élément de données de verrouillage (535).

15. Procédé (600) de mise en tampon de données dans un contrôleur de communication selon la revendication 14, **caractérisé en outre par** une étape précédente consistant à :
identifier une valeur de l'élément de données de verrouillage (535) pour déterminer si le processeur hôte peut accéder au tampon de transmission.

16. Procédé (600) de mise en tampon de données dans un contrôleur de communication selon la revendication 14 ou la revendication 15, **caractérisé en outre par** :
l'identification (610) d'une valeur d'un élément de données de validation afin de déterminer si un tampon associé à la trame de données est valide.

17. Procédé (600) de mise en tampon de données dans un contrôleur de communication selon l'une quelconque des revendications précédentes 14 à 16, **caractérisé en outre par**:
le blocage (615) de l'accès au tampon par le processeur hôte en empêchant l'accès (615) à l'élément de données de verrouillage du tampon respectif par le processeur hôte.
